# EUROPÄISCHE PATENTSCHRIFT

(11) **EP 1 093 722 B1**
(45) Veröffentlichungstag und Bekanntmachung des Hinweises auf die Patenterteilung: **10.03.2004**
(21) Anmeldenummer: 01101799.3
(22) Anmeldetag: 14.03.1989
(51) Int. Cl.: A01N 57/20, A01N 25/04, A01N 25/30

(54) **Flüssige herbizide Mittel**
Liquid herbicidal agent
Agent herbicide liquide

(30) Priorität: 18.03.1988 DE 3809159
(43) Veröffentlichungstag der Anmeldung: 25.04.2001
(62) Teilanmeldung aus: 92114412.7
(73) Patentinhaber: Bayer CropScience GmbH, 65929 Frankfurt/Main (DE)
(72) Erfinder: Albrecht, Konrad, Dr., 65779 Kelkheim (DE); Kocur, Jean, Dr., 65719 Hofheim (DE); Langelüddeke, Peter, Dr., 65719 Hofheim (DE)

(56) Entgegenhaltungen:
- EP-A- 0 048 436
- EP-A- 0 297 305
- DATABASE WPI Section Ch, Week 8725 Derwent Publications Ltd., London, GB; Class C01, AN 032875 XP002161317 & JP 61 289004 A (KAO CORP), 19. Dezember 1986 (1986-12-19)

## Beschreibung

Aus der US-PS 4 168 963 ist bekannt, daß Verbindungen der Formel 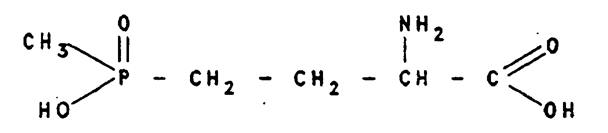 und ihre Derivate (I) eine gute und breite Wirksamkeit gegen Unkräuter vieler botanischer Familien besitzen. Die Verbindungen I enthalten ein asymmetrisches Kohlenstoffatom. Die Formel I umfaßt alle Stereoisomerens (D- und L-Form), insbesondere das biologisch aktive L-Enantiomere. Von besonderer Bedeutung ist das Ammoniumsalz dieser Verbindungen (L-Form ebenso wie Racemat).

Die Verbindungen eignen sich zur nichtselektiven Bekämpfung von unerwünschtem Pflanzenwuchs, z.B. auf landwirtschaftlichen Kulturflächen, im Weinbau, in Obst- und Ölpalmenplantagen, an Industrie- und Eisenbahnanlagen. Sie werden meist als wäßrige Lösungen formuliert.

Ferner ist bekannt, daß sich die Wirksamkeit von Herbiziden in vielen Fällen durch Zugabe von oberflächenaktiven Mitteln verbessern läßt (vgl. DE-OS 2 725 823 und 2 554 232). Besonders häufig werden zu diesem Zweck (C₁₂-C₁₈)-Fettalkoholpolyglykoläther und Alkylphenolpolyglykoläther verwendet. In der EP-A 0 048 436 wird gezeigt, daß Kokosfettalkyl-benzyl-dimethylammoniumchlorid oder C₁₂-C₁₈-Alkylpolyglykoläthersulfate die Wirkung von I gegenüber den im Vergleich mitgeprüften Fettalkohol- und Alkylphenolpolyglykoläthern verstärken. Allerdings sind die wasserhaltigen flüssigen Formulierungen von I nur stabil, wenn ihnen polare Lösungmittel, wie z.B. Dimethylformamid, N-Methylpyrrolidon oder Äthylenglykolmonomethyläther zugesetzt werden. Andernfalls treten in der Formulierung Phasentrennungen in wirkstoffangereicherte, tensidärmere und wirkstoffärmere, tensidangereicherte Schichten ein.

Ferner hat sich gezeigt, daß die Kältestabilität dieser Formulierungen oft für die Erfordernisse der Praxis unzureichend ist. Zwar fallen Wirkstoff bzw. Netzmittel erst unter dem Gefrierpunkt zwischen 0 und -10°C aus, bei im Frost gelagerten Präparaten kann es jedoch bei Abfüllungen aus größeren Behältern in Kleingebinde doch noch Probleme geben. So müssen z.B. die Großgebinde erst längere Zeit warm gelagert werden, damit sich Wirkstoff und Tensid wieder auflösen und die Formulierung homogen in Kleinpackungen abgefüllt werden kann. Weiterhin sollten die Präparate wegen der Brennbarkeit und einer möglichen Anwendergefährdung keine oder möglichst geringe Menge organischer Lösungsmittel enthalten. Wichtig ist auch eine Verbesserung der Regenbeständigkeit der Formulierungen, welche als Wirkstoff Verbindungen der Formel I oder deren Derivate enthalten, da diese Wirkstoffe wasserlöslich sind und über die Blattoberfläche von den Pflanzen aufgenommen werden. Somit besteht vor allem in tropischen Gebieten die Gefahr, daß der Wirkstoff durch nach der Applikation einsetzenden Regen von der Blattoberfläche abgewaschen und damit unwirksam wird. Zusätze an Haftmitteln, wie man sie zur Verbesserung der Regenbeständigkeit in Spritzpulvern verwendet, wie z.B. Polyvinylalkohole, -pyrrolidone, -acrylate, -acetate, Hydroxiäthyl-, Carbäthoxiäthyl-, Methylcellulosen, Dextrine, hydrolysierte Peptide, Heteropolysaccharide, Ligninsulfonate, kationaktive Verbindungen oder Mineralöle hatten bei Versuchen kein Effekte gezeigt.

Somit sind unter praktischen Gesichtspunkten insbesondere die folgenden Forderungen an flüssige Formulierungen der Verbindungen der Formel I zu stellen:
a) hohe Kältestabilität
b) bessere Herbizidwirkung gegenüber den bekannten Formulierungen
c) hohe Regenbeständigkeit und
d) möglichst geringer Zusatz von organischen Lösungsmitteln.

Überraschenderweise wurde nun gefunden, daß sich Formulierungen der obengennanten Wirkstoffe, welche diese verbesserten Eigenschaften aufweisen, durch die Verwendung bestimmter Tenside erhalten lassen.

Gegenstand der vorliegenden Erfindung sind daher flüssige herbizide Mittel, gekennzeichnet durch einen Gehalt an einer Verbindung der Formel 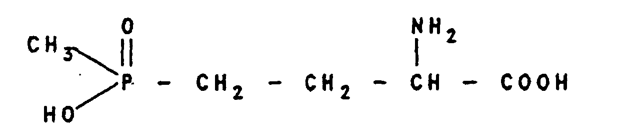 in Form des Racemates oder des L-Enantiomeren, deren Niederalkylester oder Salzen mit Säuren oder Basen (I) (= Komponente 1)
in Kombination mit einem oder mehreren Tensiden (= Komponente 2) in Form von (C₁₀-C₁₈)-Fettalkoholpolyglykolethersulfaten oder deren Salzen, wobei das Mittel bezogen auf die Komponente (1) den 2- bis 8-fachen Gewichtsanteil der Komponente (2) enthält.

Eine weitere bevorzugte Ausgestaltung der erfindungsgemäßen Mittel besteht darin, daß sie neben 5 - 40 Gew.-% einer Verbindung I den 2 - 8-fachen Gewichtsanteil der erfindungsgemäßen Tenside und 0 - 20 Gew.-% eines wassermischbaren polaren Lösungsmittels enthalten, wie z.B. von Methylglykol, Propylenglykolmethylether, PEG 200, Isopropanol, DMF oder NMP.

Weitere oberflächenaktive Substanzen sind insbesondere zwischen 4 - 15 Gew.-% in der fertigen Formulierung enthalten.

Die erfindungsgemäßen Mittel enthalten in Wasser gelöster Form 5 - 40 Gew.-% eines Wirkstoffes der Formel I sowie 2 - 8 Teile der erfindungsgemäßen Tenside pro Wirkstoffteil. Zusätzlich können weitere oberflächenaktive Mittel zur Verbesserung des Benetzungsvermögens, Haft- und Bindemittel, Harnstoff oder anorganische Salze wie z.B. Ammoniumsulfat, wasserlösliche Lösungsmittel sowie Entschäumer enthalten sein. Auch können diese Tenside vorteilhaft in Kombinationsformulierungen einer Verbindung I mit anderen herbiziden Wirkstoffen wie z.B. Simazin, Terbutylazin, Diuron, Monolinuron, Metolachlor, Chlortoluron, Oxyfluorfen, Bifenox, Imazethapyr, Chlorimuron-ethyl, Sulfonylharnstoffen wie z.B. Sulfometuron, Metsulfuron eingesetzt werden und die Wirkung von I verstärken.

Die Tenside können auch vor der Applikation unmittelbar der Spritzbrühe der Wirkstofflösung von I oder den Mischformulierungen mit den genannten Herbiziden zugesetzt werden.

Die erfindungsgemäßen Mittel liegen als Lösungen, in Mischungen mit wasserunlöslichen Wirkstoffen wie z.B. den o.a. Triazin- und Harnstoffherbizid-Wirkstoffen als Suspensionskonzentrate vor, in welchen die unlöslichen Wirkstoffe in der festen, die Verbindung I und die erfindungsgemäßen Tenside in der wässrigen flüssigen Phase enthalten sind. Niedrigschmelzende Wirkstoffe oder flüssige Wirkstoffe wie Metolachlor werden mit einer Verbindung I und den Tensiden in Form einer stabilen Emulsion zubereitet, in welcher in der wässrigen Phase die Verbindung I und die erfindungsgemäßen Tenside, in der "öligen" flüssigen Phase der wasserunlösliche flüssige oder der in organischen Lösungsmitteln gelöste Wirkstoff enthalten ist, wobei die organischen Lösungsmittel selbst nicht wasserlöslich sein sollten.

Die Herstellung derartiger Mischformulierungen kann auf verschiedene Weise erfolgen. Zum einen kann man so vorgehen, daß man die einzelnen Bestandteile separat in Form von Einzeldispersionen und Lösungen herstellt und diese dann unter Verwendung einer Kolloidmühle mischt. Ebenso ist es möglich, die Wirkstoffe der feindispersen Phase zusammen zu vermahlen und dieser Mischdispersion die Wirkstofflösung zuzusetzen. Prinzipiell kann man auch alle Wirkstoffe in einem Durchgang zur gewünschten Mischformulierung verarbeiten.

Die auf diese Weise hergestellten Kombinationsformulierungen sind lagerstabil, zeigen nahezu keine chemischen Veränderungen und sind anwendungstechnisch einfach zu handhaben.

Die erfindungsgemäßen Mittel werden nach Verdünnen in Wasser appliziert. Als Wirkstoffe der Verbindung I kommen insbesondere Verbindungen in Betracht, die in der US-PS 4 168 963 beschrieben sind oder entsprechend hergestellt werden können wie z.B. (3-Amino-3-carboxy-propyl)-methyl-phosphinsäure (Phosphinothricin), deren Hydrochlorid, Mononatrium-, Dinatrium-, Monokalium-, Dikalium-, Monocalcium-, Ammonium-, NH₃(CH₃)⁺-, NH₂(CH₃)₂⁺-, NH(CH₃)₃⁺-, NH(CH₃)₂(C₂H₄OH)⁺- oder NH₂(CH₃)(C₂H₄OH)⁺-Salze oder deren Methyl-, Ethyl-, Propyl- oder Butylester.

Zur Herstellung der erfindungsgemäßen Mittel löst man den Wirkstoff in Wasser und setzt die errechnete Menge des wirkungsverstärkenden oberflächenaktiven Mittels und gegebenenfalls weitere übliche Hilfsmittel wie Lösungsvermittler (Propylenglykolmonomethylether, Glykole, Polyglykole, Blockpolymere, DMF, N-Methylpyrrolidon etc.), weitere Netzmittel, Farbstoffe oder Entschäumer (z.B. Silicone, Polyäthylenpolypropylenglykole, Seifen etc.) zu und vermischt innig.

Die erfindungsgemäßen Tenside und die weiteren üblichen Formulierungshilfsmittel werden beispielsweise beschrieben in:
Watkins, "Handbook of Insecticide Dust Diluents and Carriers", 2nd Ed., Darland Books, Caldwell N.J.; H.v.Olphen, "Introduction to Clay Colloid Chemistry", 2nd Ed., J. Wiley & Sons, N.Y.; Marschen, "Solvents Guide", 2nd Ed., Interscience, N.Y. 1950; McCutcheon's, "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Als Beispiel für die erfindungsgemäßen Tenside sei genannt:
Fettalkoholpolyglykoläthersulfate: Genapol LRO®, Genapol LRC®, (Hoechst AG), Gezavon LL 20® (Zimmerli AG), Texapon ASV®, Texapon Na®, Texapon M (Henkel KG).

Die nachfolgenden Beispiele dienen zur Erläuterung der Erfindung:

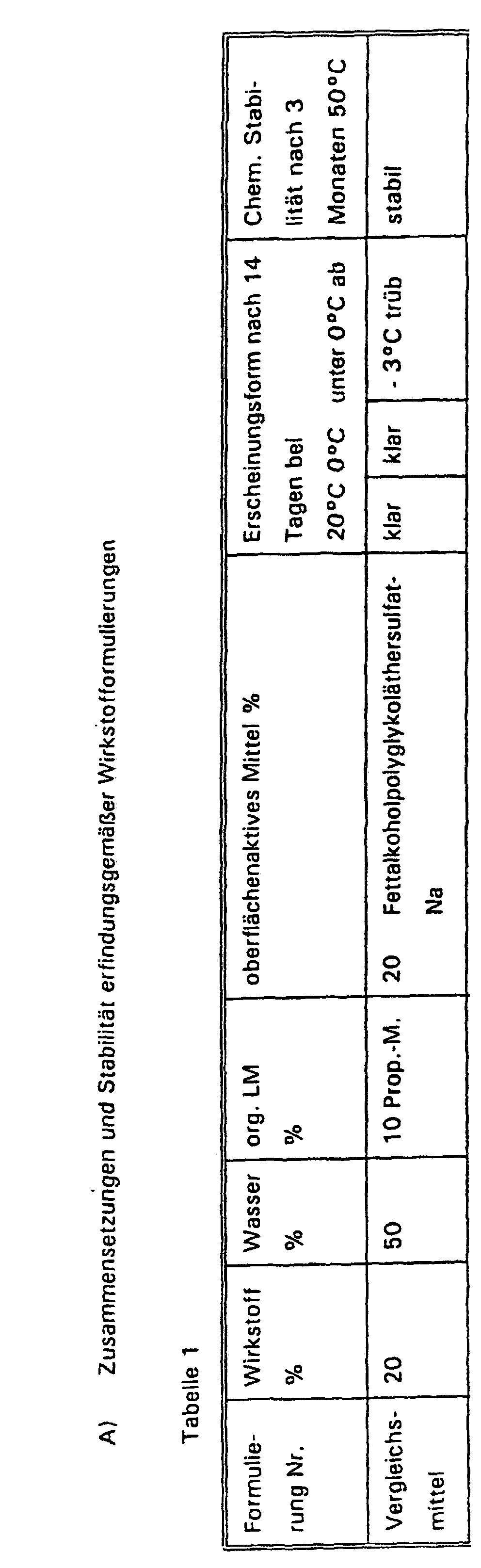

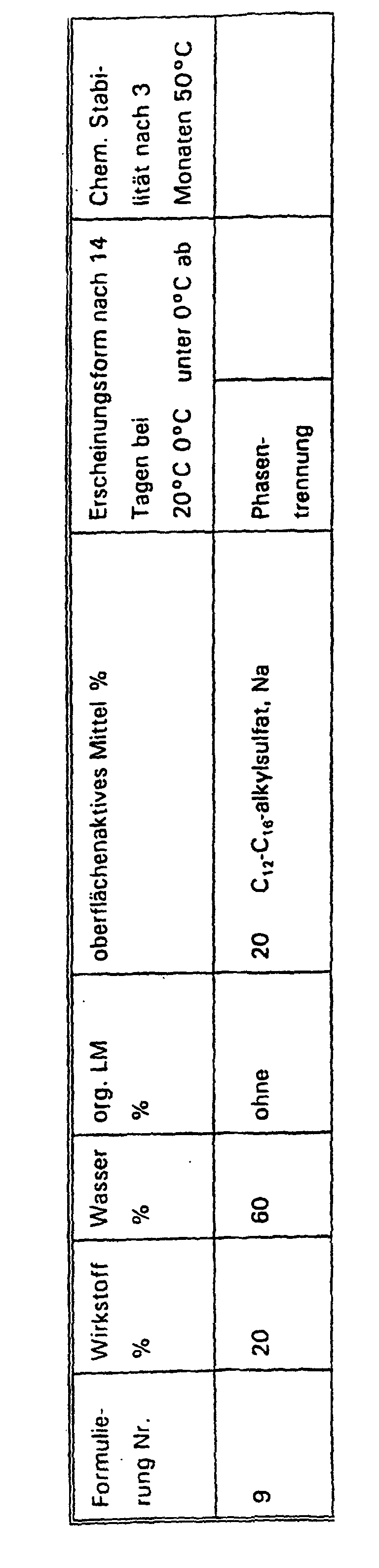

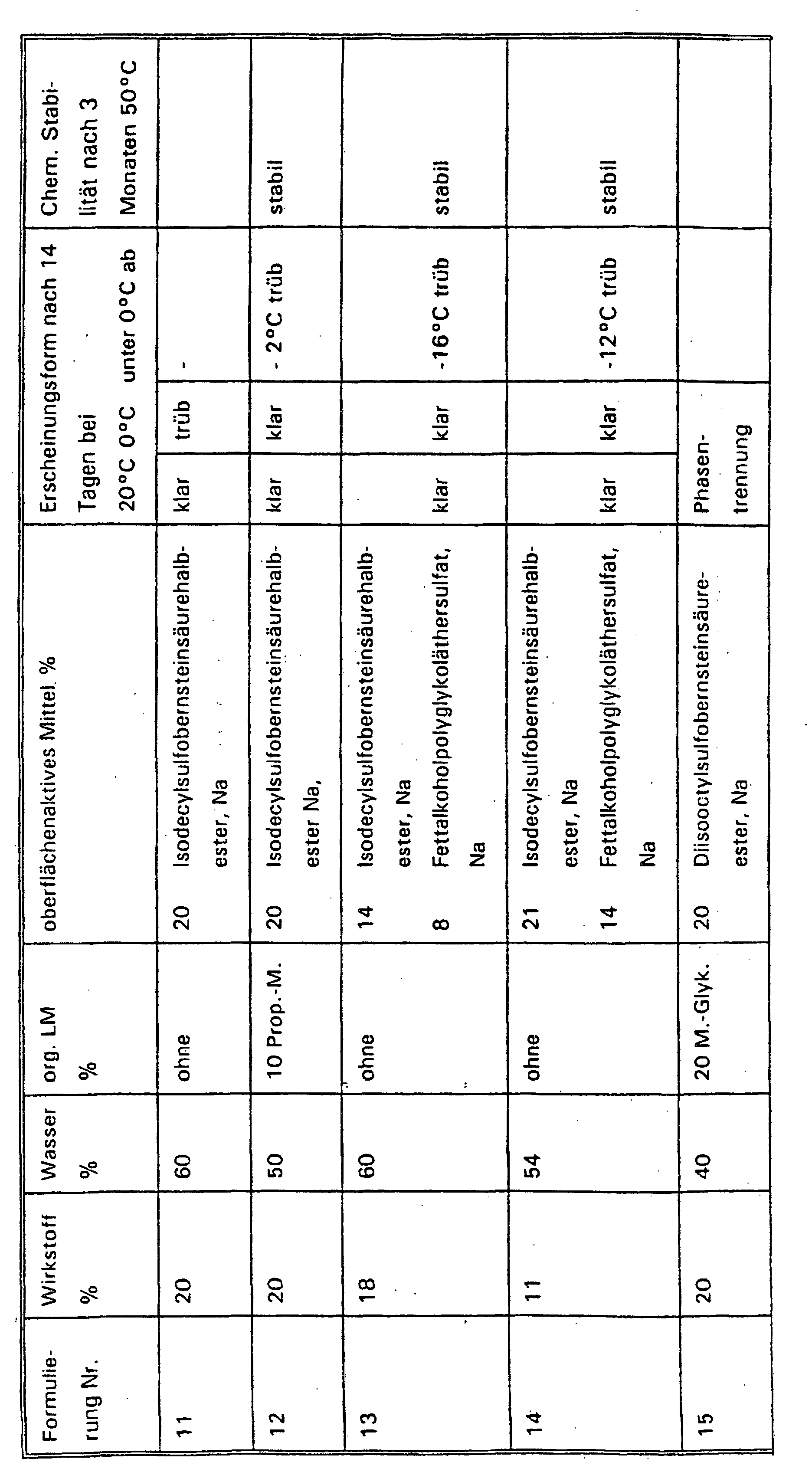

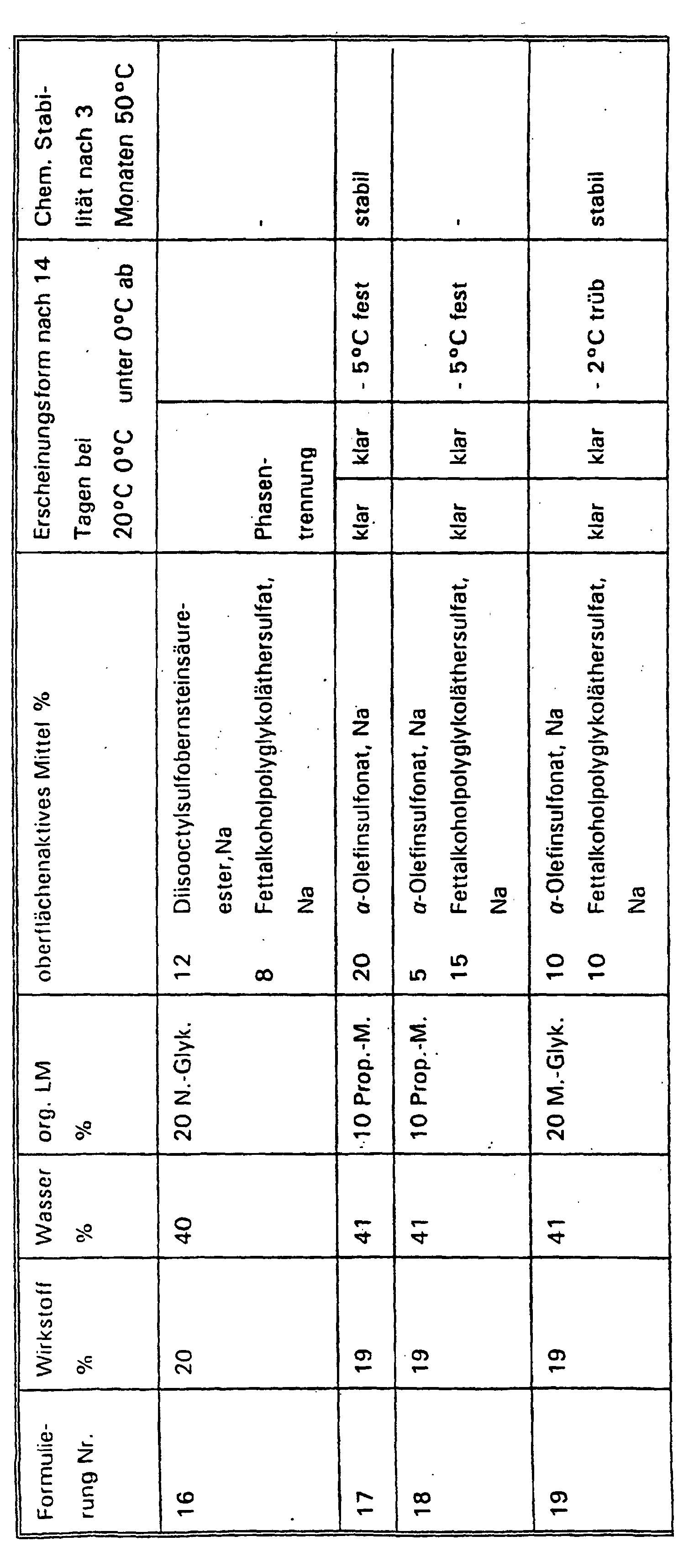

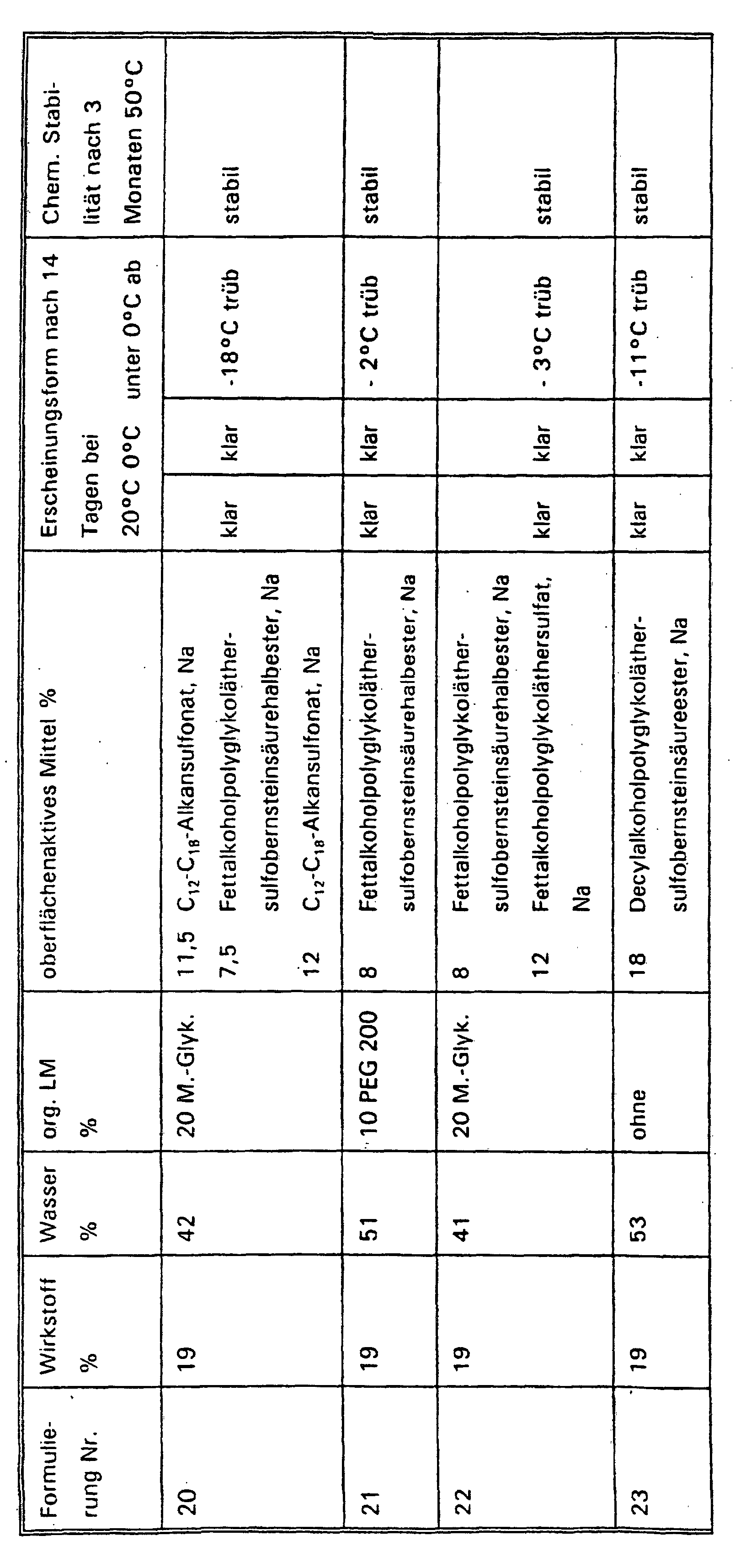

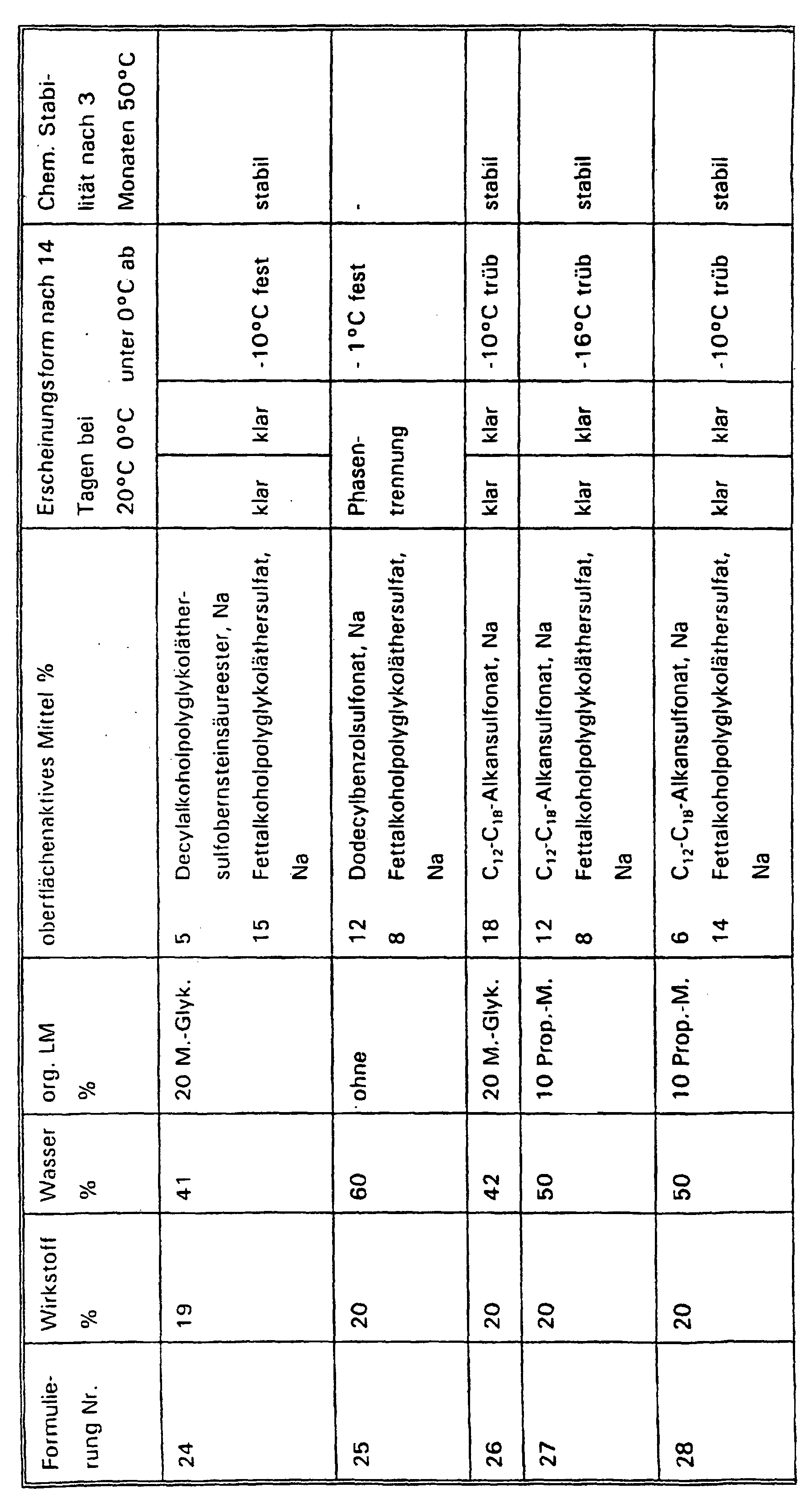

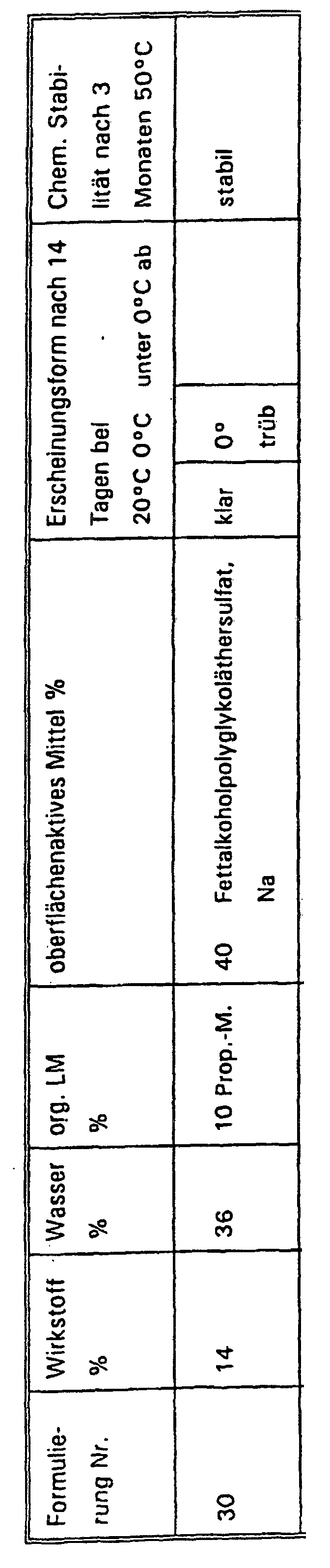

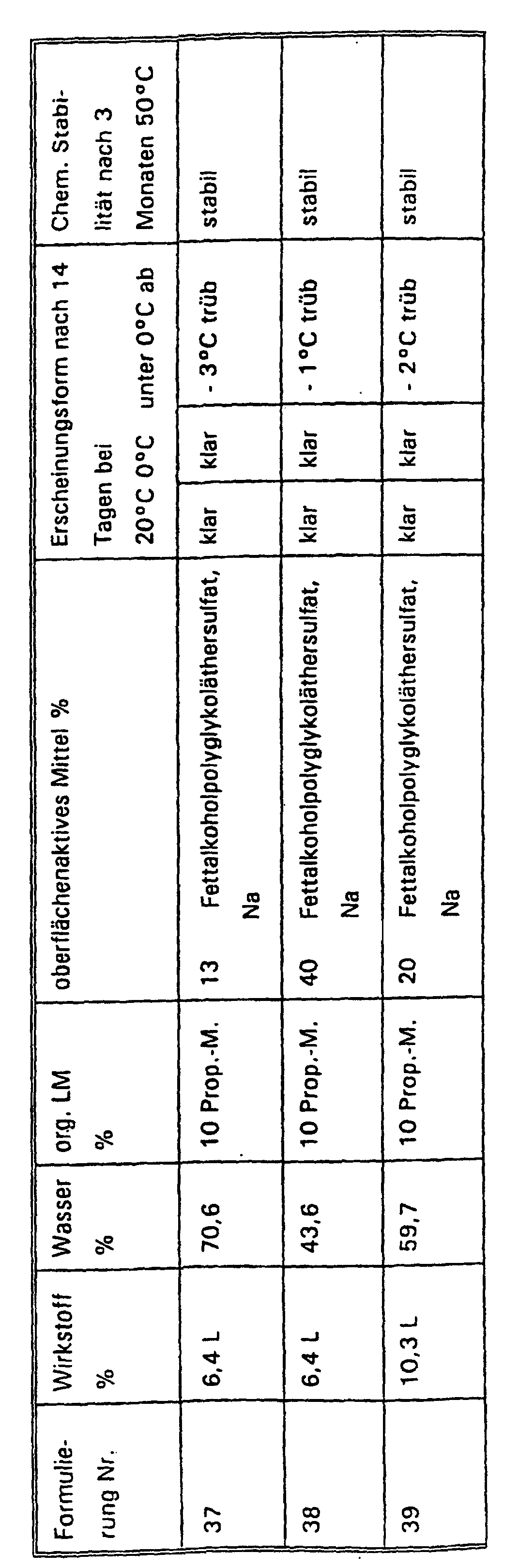

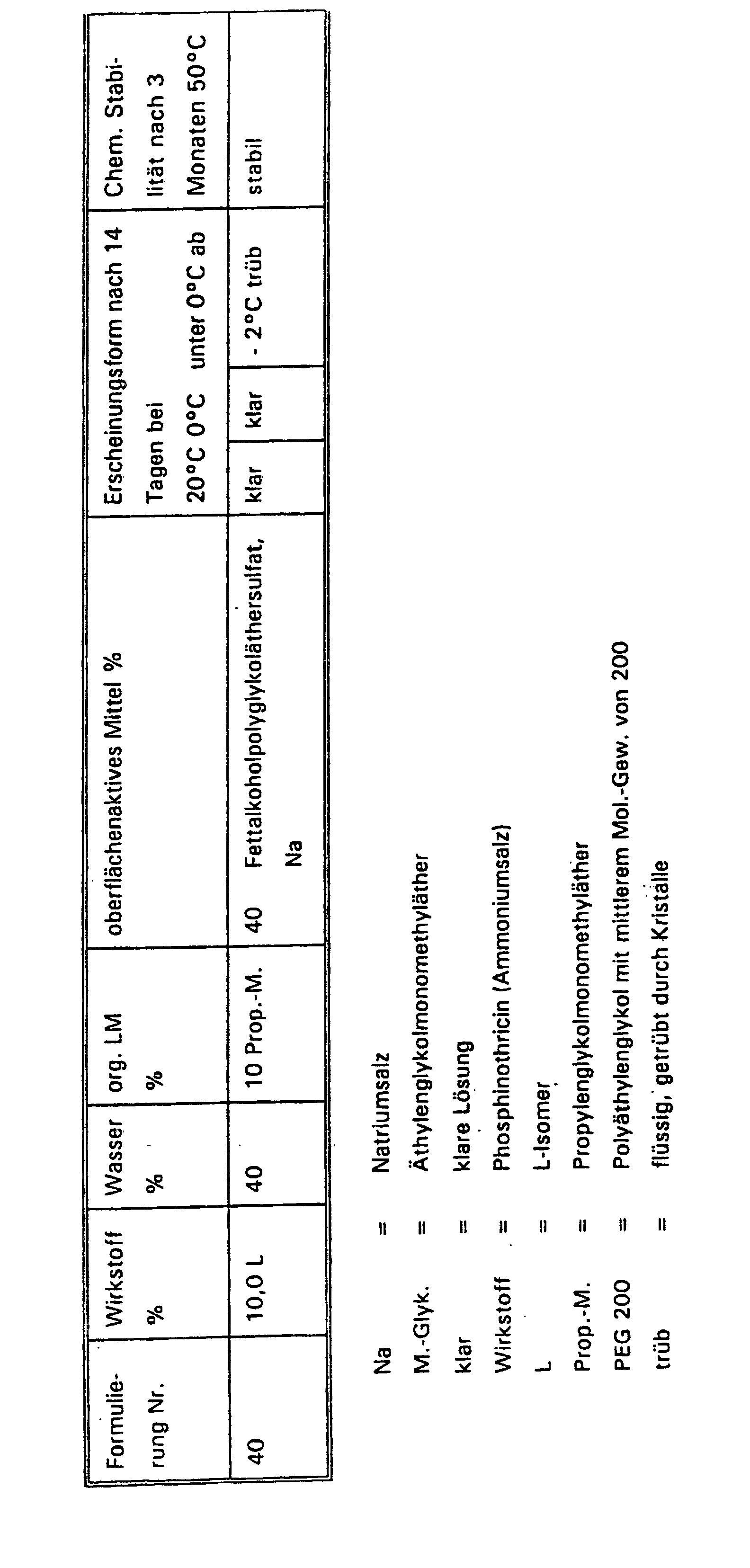

### B) Biologische Beispiele

### Beispiel 1

Zur Ermittlung der Regenbeständigkeit der erfindungsgemäßen Formulierungen wurden im Gewächshaus angezogene Gerstenpflanzen im 3-Blattstadium mit Lösung der verschiedenen Formulierungen besprüht (Wasseraufwandmenge 300 l/ha). Ein Teil der Pflanzen wurde etwa 3 Stunden nach dieser Behandlung einer künstlichen Beregnung ausgesetzt, wobei etwa 10 mm künstlicher Regen appliziert wurde. 19 Tage nach dieser Behandlung wurde die Wirksamkeit (Schädigung der Pflanzen) bonitiert. Die Wirkstoffkonzentrationen und die Versuchsergebnisse sind in Tab. 4 wiedergegeben.

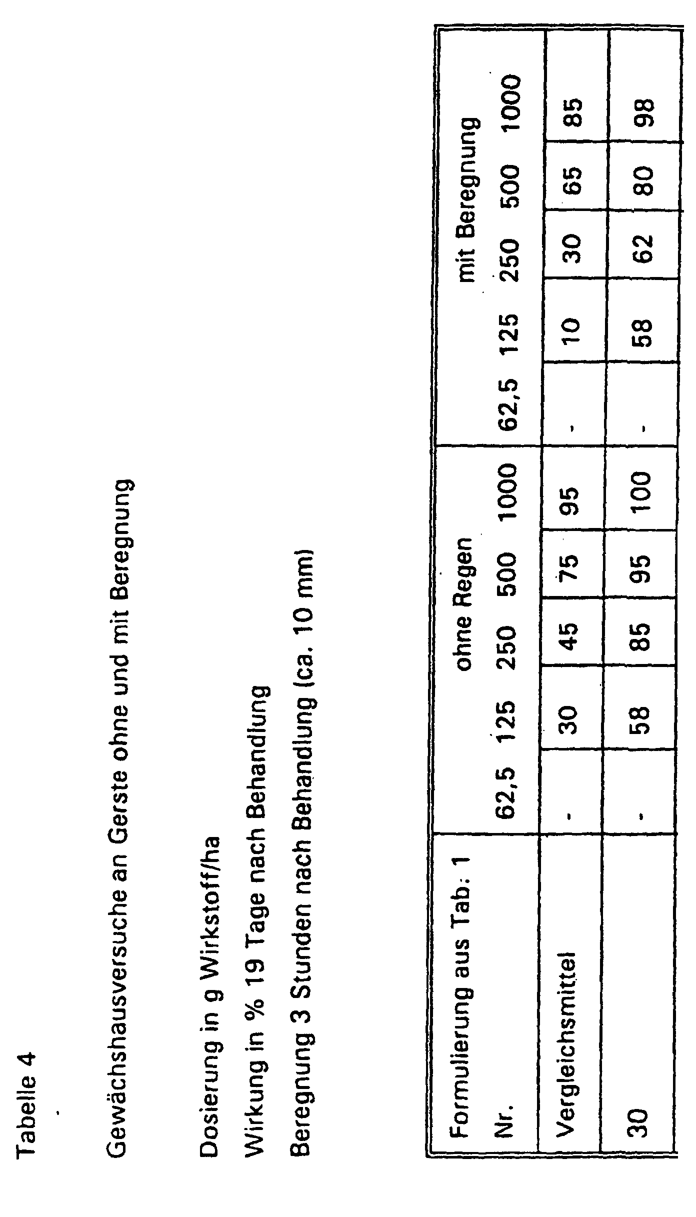

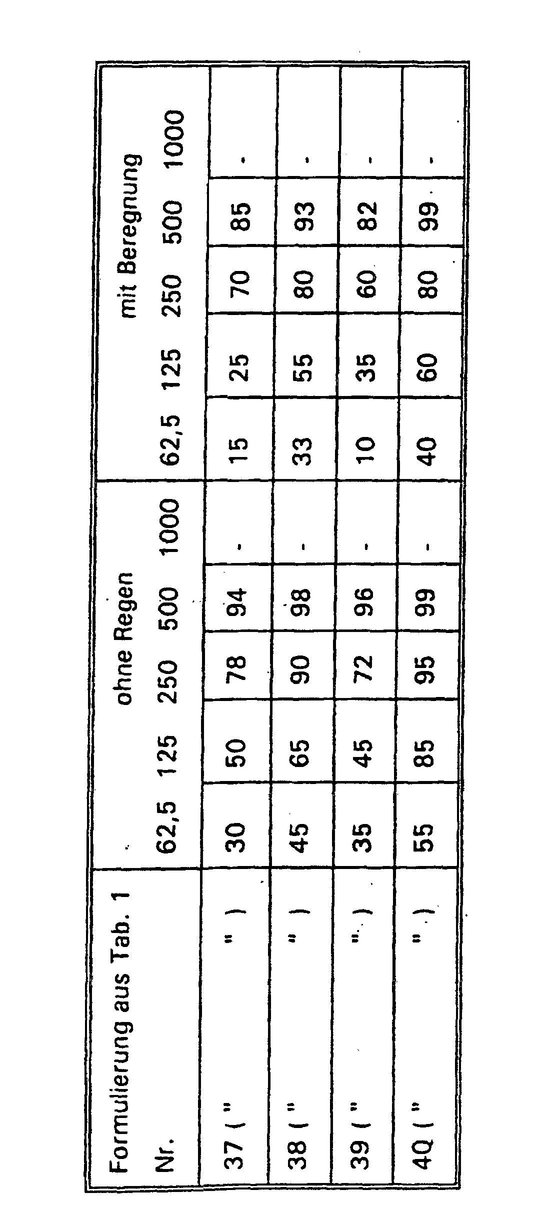

### Beispiel 2

Zur Prüfung der Regenbeständigkeit der erfindungsgemäßen Formulierungen wurde in einer Ölbaumpflanzung ein Versuch an Paspalum conjugatum, einer perennierenden Graminee, angelegt. Nachdem die Pflanzen mit Lösungen der verschiedenen Formulierungen besprüht worden waren, wurde ein Teil der Pflanzen einer künstlichen Beregnung ausgesetzt, wobei künstlicher Regen mit ca. 20 mm Niederschlagshöhe appliziert wurde. 2 Wochen nach dieser Behandlung wurde die Wirksamkeit (Schädigung der Pflanzen) bonitiert. Die Wirkstoffkonzentrationen und die Versuchsergebnisse sind in Tab. 5 wiedergegeben.

### Tabelle 5

### Feldversuch an Paspalum conjugatum

Wirkung in % 2 Wochen nach Behandlung
Beregnung 4 Stunden nach Behandlung mit 20 mm

| Formulierung aus Tab. 1 Nr. | | ohne Beregnung | | mit Beregnung | |
|---|---|---|---|---|---|
| | g ai/ha | 400 | 500 | 400 | 500 |
| Vergleichsmittel | | 85 | 95 | 20 | 30 |
| 30 | | 90 | 98 | 75 | 82 |
| 38 | g ai/ha | 100 | 250 | 200 | 250 |
| | | 95 | 99 | 80 | 85 |

## Patentansprüche

1. Flüssiges herbizides Mittel, **gekennzeichnet durch** einen Gehalt an einer Verbindung der Formel (I) 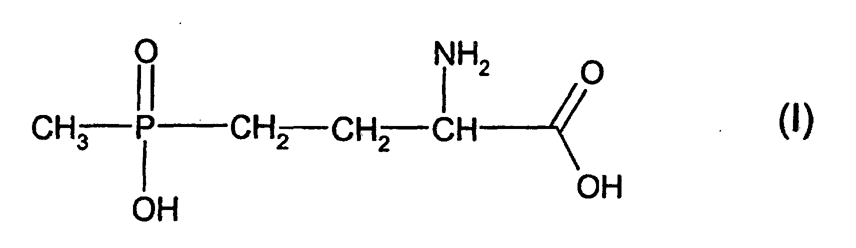 in Form des Racemates oder des L-Enantiomeren, deren Niederalkylester oder Salzen mit Säuren oder Basen (Komponente 1)
in Kombination mit einem oder mehreren Tensiden (Komponente 2) in Form von (C₁₀-C₁₈)-Fettalkoholpolyglykolethersulfaten oder deren Salzen, wobei das Mittel bezogen auf die Komponente (1) den 2- bis 8-fachen Gewichtsanteil der Komponente (2) enthält.

2. Mittel gemäß Anspruch 1, **dadurch gekennzeichnet, dass** es 5-40 Gew.-% der Komponente (1) enthält.

3. Mittel gemäß Anspruch 1 oder 2, **dadurch gekennzeichnet, dass** es 5-40 Gew.-% der Komponente (1) und den 2- bis 6,25-fachen Gewichtsanteil der Komponente (2) enthält.

4. Mittel gemäß einem der Ansprüche 1 bis 3, **dadurch gekennzeichnet, daß** es bis zu 20 Gew.-% eines wassermischbaren polaren Lösungsmittels enthält.

5. Mittel gemäß einem der Ansprüche 1 bis 4, **dadurch gekennzeichnet, daß** es bis zu 20 Gew.-% eines wassermischbaren polaren Lösungsmittels aus der Gruppe Methylglykol, Propylenglykolmonomethylether, PEG 200, Isopropanol, Dimethylformamid, N-Methylpyrrolidon oder einer Mischung aus mehreren der genannten Lösungsmittel enthält.

6. Mittel gemäß einem der Ansprüche 1 bis 5, **dadurch gekennzeichnet, daß** es bis zu 20 Gew.-% Propylenglykolmonomethylether enthält.

7. Mittel gemäß einem der Ansprüche 1 bis 6, **dadurch gekennzeichnet, daß** es als Komponente (1) Phosphinothricin-ammoniumsalz enthält.

8. Mittel gemäß einem der Ansprüche 1 bis 7, **dadurch gekennzeichnet, daß** es als Komponente (2) (C₁₀-C₁₈)-Fettalkoholpolyglykolethersulfat-Natriumsalz enthält.

9. Verfahren zur Bekämpfung von unerwünschten Pflanzen, **dadurch gekennzeichnet, daß** man auf diese oder die landwirtschaftlich genutzten Flächen eine wirksame Menge eines herbiziden Mittels gemäß einem der Ansprüche 1 bis 8 appliziert.

## Claims

1. A liquid herbicidal composition containing a compound of the formula (I) 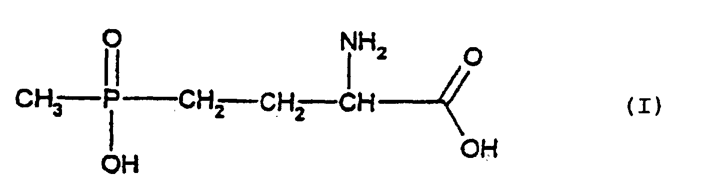 in the form of the racemate or of the L enantiomer, lower alkyl esters thereof or salts thereof with acids or bases (component 1) in combination with one or more surfactants (component 2) in the form of (C₁₀-C₁₈)-fatty alcohol polyglycol ether sulfates or salts thereof, the composition containing the 2-to 8-fold proportion by weight of component (2) based on component (1).

2. A composition as claimed in claim 1, which contains 5-40% by weight of component (1).

3. A composition as claimed in claim 1 or 2, which contains 5-40% by weight of component (1) and the 2- to 6.25-fold proportion by weight of component (2).

4. A composition as claimed in any of claims 1 to 3, which contains up to 20% by weight of a water-miscible polar solvent..

5. A composition as claimed in any of claims 1 to 4, which contains up to 20% by weight of a water-miscible polar solvent selected from the group consisting of methyl glycol, propylene glycol monomethyl ether, PEG 200, isopropanol, dimethylformamide, N-methylpyrrolidone or a mixture of several of the above solvents.

6. A composition as claimed in any of claims 1 to 5, which contains up to 20% by weight of propylene glycol monomethyl ether.

7. A composition as claimed in any of claims 1 to 6, which contains phosphinothricin ammonium salt as component (1).

8. A composition as claimed in any of claims 1 to 7, which contains (C₁₀-C₁₈)-fatty alcohol polyglycol ether sulfate sodium salt as component (2).

9. A method of controlling undesired plants, wherein an active amount of a herbicidal composition as claimed in any of claims 1 to 8 is applied to these plants or the agricultural areas.

## Revendications

1. Agent herbicide liquide, **caractérisé par** une teneur en un composé de formule (I) 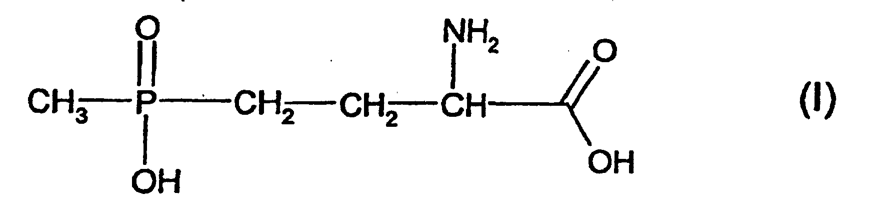 sous la forme du mélange racémique ou de l'énantiomère L, ses esters alkyliques inférieurs ou sels avec des acides ou des bases (composant 1)
en combinaison avec un ou plusieurs agents tensio-actifs (composant 2) sous la forme d'éthersulfates de polyglycol d'alcools gras en C₁₀ à C₁₈ ou de leurs sels, dans lequel l'agent contient une proportion en poids de 2 à 8 fois le composant (2) par rapport au composant (1).

2. Agent selon la revendication 1, **caractérisé en ce qu'**il contient de 5 à 40 % en poids du composant (1).

3. Agent selon la revendication 1 ou 2, **caractérisé en ce qu'**il contient de 5 à 40 % en poids du composant (1) et une teneur en poids de composant (2) multipliée par un facteur de 2 à 6,25 fois.

4. Agent selon une des revendications 1 à 3,
**caractérisé en ce qu'**il contient jusqu'à 20 % en poids d'un solvant polaire miscible à l'eau.

5. Agent selon une des revendications 1 à 4,
**caractérisé en ce qu'**il contient jusqu'à 20 % en poids d'un solvant polaire miscible à l'eau dans le groupe du méthylglycol, éther monométhylique de propylèneglycol, PEG 200, isopropanol, diméthylformamide, N-méthylpyrrolidone ou d'un mélange de plusieurs des solvants mentionnés.

6. Agent selon une des revendications 1 à 5,
**caractérisé en ce qu'**il contient jusqu'à 20 % en poids d'éther monométhylique de propylèneglycol.

7. Agent selon une des revendications 1 à 6,
**caractérisé en ce qu'**il contient comme composant (1) un sel d'ammonium de phosphinothricine.

8. Agent selon une des revendications 1 à 7,
**caractérisé en ce qu'**il contient comme composant (2) un sel de sodium d'éthersulfate de polyglycol d'un alcool gras en C₁₀ à C₁₈.

9. Procédé de lutte contre les plantes non souhaitées, **caractérisé en ce qu'**on applique sur celles-ci ou sur les surfaces agricoles utilisées une quantité efficace d'un agent herbicide selon une des revendications 1 à 8.
